# EUROPÄISCHE PATENTSCHRIFT

(11) **EP 2 162 316 B1**
(45) Veröffentlichungstag und Bekanntmachung des Hinweises auf die Patenterteilung: **31.10.2012**
(21) Anmeldenummer: 08759498.2
(22) Anmeldetag: 09.05.2008
(51) Int. Cl.: G06T 19/00

(54) **KAMERAGESTÜTZTES NAVIGATIONSSYSTEM UND VERFAHREN ZU SEINEM BETRIEB**
CAMERA-ASSISTED NAVIGATION SYSTEM AND METHOD FOR OPERATING IT
SYSTÈME DE NAVIGATION ASSISTÉ PAR CAMÉRA ET PROCÉDÉ D'UTILISATION DE CELUI-CI

(30) Priorität: 29.06.2007 DE 102007030226
(43) Veröffentlichungstag der Anmeldung: 17.03.2010
(73) Patentinhaber: Robert Bosch GmbH, 70442 Stuttgart (DE)
(72) Erfinder: FAENGER, Jens, Palo Alto, CA 94304 (US); KYNAST, Andreas, 70176 Stuttgart (DE)
(86) Internationale Anmeldenummer: PCT/EP2008/055769
(87) Internationale Veröffentlichungsnummer: WO 2009/003749

(56) Entgegenhaltungen:
- EP-A- 1 283 406
- WO-A-2006/037402
- US-B1- 6 278 479

## Beschreibung

Die Erfindung betrifft ein kameragestütztes Navigationssystem, wie es vorzugsweise in Kraftfahrzeugen zum Einsatz kommen kann, sowie ein Verfahren zu seinem Betrieb.

### Stand der Technik

In Kraftfahrzeugen eingesetzte Navigationssysteme umfassen in der Regel Anzeigemittel in Form von Monitoren oder Displays, auf denen dreidimensionale Darstellungen der Fahrzeugumgebung abgebildet werden können. Diese dreidimensionalen Darstellungen werden generiert, indem aufgrund von Positionsinformationen entsprechende Daten aus einem Datenbestand, welcher topografische und andere Umgebungsdaten enthält, ausgewählt werden. Anhand der ausgewählten Daten erfolgt dann eine Rekonstruktion der sichtbaren Fahrzeugumgebung, die vorzugsweise dreidimensional und in frei wählbarer Perspektive auf dem Anzeigemittel abgebildet wird. Die Darstellung erfolgt jedoch in stark generalisierter Form. Das heißt, Straßenverläufe, dreidimensionale Gebilde wie Gebäude, sowie markante Landmarken werden in einer Weise dargestellt, dass zumindest markante Konturen erhalten bleiben, bzw. sichtbare Flächen mit Texturen in Anlehnung an deren tatsächliches Erscheinungsbild gefüllt werden. Der damit verbundene künstliche Eindruck der dreidimensionalen Darstellung erschwert jedoch teilweise in der realen Umgebung ein schnelles Wiedererkennen der dargestellten Szene und damit die Orientierung des Fahrzeugführers. Das Vorhalten eines Datenbestandes, der flächendeckend eine fotorealistische Rekonstruktion der Fahrzeugumgebung ermöglichen würde, wird in Navigationssystemen üblicherweise aus Kapazitätsgründen vermieden. Ein weiterer Nachteil bekannter Lösungen besteht darin, dass der zur Rekonstruktion benötigte Datensatz permanent aktualisiert werden muss, was ebenfalls mit einem hohen Aufwand verbunden ist. Werden Aktualisierungszyklen zu groß angesetzt, können bereits kleinere optische oder bauliche Veränderungen, beispielsweise an Gebäuden, das Erscheinungsbild, welches sich einem Fahrer aus seinem Blickwinkel bietet, derart verändern, dass ein sicheres Erkennen bzw. eine sichere Orientierung bei einem häufig flüchtig vorgenommenen Vergleich mit der auf dem Anzeigemittel des Navigationssystems abgebildeten Szene deutlich erschwert wird.

Ein ähnliches Problem ergibt sich, wenn sichtbare Flächen mit Texturen gefüllt werden, die nicht in Anlehnung an deren tatsächliches Erscheinungsbild generiert wurden. Das kann beispielsweise der Fall sein, wenn in verwendeten Datenbeständen überhaupt keine Texturinformationen, beispielsweise für Gebäude, hinterlegt sind. Ein Verfahren mit den Merkmalen des Oberbegriffs des Anspruchs 1 ist aus der EP 1 283 406 A2 bekannt.

### Offenbarung der Erfindung

### Technische Aufgabe

Die Aufgabe der Erfindung besteht darin, den Grad der Übereinstimmung zwischen der realen Umgebung eines Fahrzeuges und einer auf dem Anzeigemittel eines Navigationssystems dargestellten Rekonstruktion einer Szene aus dieser Umgebung zu verbessern.

### Technische Lösung

Gelöst wird diese Aufgabe durch ein Verfahren mit den Merkmalen des Anspruchs 1, sowie ein System gemäß Anspruch 7. 4

Die Erfindung beruht auf einer Kombination von bereits gespeicherten für eine Rekonstruktion der Umgebung eines Kraftfahrzeuges geeigneten Daten und in Echtzeit aufgenommen Bilddaten dieser Umgebung. Die Erfindung kann von einem erfindungsgemäßen Navigationssystem für Kraftfahrzeuge automatisch ausgeführt werden. Dieses Navigationssystem muss mindestens ein Anzeigemittel zur bildlichen Darstellung der Fahrzeugumgebung, mindestens einen Datenspeicher, der Daten enthält, die eine dreidimensionale Rekonstruktion der Fahrzeugumgebung ermöglichen, mindestens eine Kamera, welche digitale Bilder der Fahrzeugumgebung aufnehmen kann und mindestens eine Datenverarbeitungseinheit, welche aus den im Datenspeicher enthaltenen Daten eine auf dem Anzeigemittel darstellbare Rekonstruktion der Fahrzeugumgebung erzeugen und eine zumindest teilweise Einpassung der von der Kamera aufgenommenen digitalen Bilder in die Rekonstruktion der Fahrzeugumgebung, die auf den im Datenspeicher enthaltenen Daten basiert, vornehmen kann, umfassen. Dem gemäß besteht die Ausführung der Erfindung in einem Verfahren zur Verbesserung der Übereinstimmung zwischen durch ein Navigationssystem virtuell erzeugten Rekonstruktionen von Szenen aus der Umgebung eines Fahrzeuges und dem visuellen Eindruck eines Fahrers dieses Fahrzeugs beim Betrachten der realen Szenen, bei dem mit Hilfe einer Kamera digitale Bilder der Fahrzeugumgebung aufgenommen und zumindest teilweise in eine virtuelle Rekonstruktion der Fahrzeugumgebung, die auf Daten in einem Datenspeicher des Navigationssystems basiert, eingepasst werden.

Dabei bilden Daten, die eine dreidimensionale Darstellung auf der Basis von Standarttexturen, wie sie in Navigationssystemen üblich ist, einen möglichen Ausgangspunkt einer erfindungsgemäßen Rekonstruktion. In diese Darstellung werden erfindungsgemäß reale Bilder, die von mindestens einer digitalen Kamera in Echtzeit aufgenommen werden, integriert.

### Vorteilhafte Wirkungen

Diese Integration der in Echtzeit aufgenommenen Bilder kann dabei einen Ersatz von mit Standarttexturen belegten Flächen durch fotorealistische Darstellungen unter Nutzung und entsprechender Einpassung der digitalen Bilder umfassen. In einer anderen Variante wird unter Nutzung der digitalen Bilder die Realitätsnähe der bisher verwendeten Texturen geprüft. Bei Feststellung einer zu großen Realitätsferne, also der Nichteignung der bisher verwendeten Textur, wird diese durch eine geeignetere Textur ersetzt. Dabei können nacheinander mehrere Texturen, die in einem entsprechenden Datenspeicher des Navigationssystems abgelegt oder auf andere Weise verfügbar sind, im Hinblick auf das digitale Bild auf ihre Realitätsnähe geprüft und gegebenenfalls für den Ersatz der bisherigen Textur ausgewählt werden. Es ist ebenso möglich, unter Auswertung des digitalen Bilds und bei Nichtverfügbarkeit einer geeigneten Ersatztextur eine Textur zu generieren und diese in die anzuzeigende Darstellung zu integrieren. Bereits beim Arbeiten mit optimierten Texturen lässt sich ein wesentlich verbesserter visueller Eindruck der Umgebungsdarstellung in Navigationssystemen erzielen. Der vorteil des Arbeitens mit Texturen besteht darin, dass durch die Verbesserung einer Textur bzw. den Ersatz einer Standarttextur durch eine durch Abgleich mit einem digitalen Bild optimierte Textur die abzuspeichernde Datenmenge für den Fall einer dauerhaften Verwendung der erfindungsgemäß generierten Mischbilder nur unwesentlich ansteigt. Dennoch stellt der Einsatz der optimierten Texturen eine wesentliche Verbesserung und einfache Möglichkeit der Aktualisierung des Datensatzes eines Navigationssystems dar. Die Integration aktueller Kamerabilder bzw. Kamerabildausschnitte von der Fahrzeugumgebung in die virtuelle dreidimensionale Darstellung macht zwar in diesen Bereichen die gesonderte Erzeugung oder Auswahl einer Textur überflüssig, stellt aber an eine Speicherung der Bilder wesentlich höhere Anforderungen bezüglich des Speicherplatzes.

Vorteilhafterweise können Grundntuster verwendeter Standarttexturen beibehalten und mit Hilfe der ausgewerteten Kamerabilder automatisch in mehrere neue und detailliertere Stufen von Texturen untergliedert wenden.

Durch die Erfindung ergeben sich weitere verschiedene Vorteile. Zunächst kommt es zu einer besseren Übereinstimmung und besseren wiedererkennung der Bildschirmdarstellung mit der durch den Fahrer wahrgenommenen Fahrzeugumgebung. Die realitätsnähere Darstellung erleichtert die Orientierung eines Fahrzeugführers. Der Benutzungskomfort steigt, da es sich um eine abwechslungsreichere und visuell ansprechendere Darstellung handelt, da nicht nur mit wenigen Standorttexturen gearbeitet wird. Des weiteren lässt sich das Verfahren kostengünstig realisieren, wenn bereits ohnehin in einem Fahrzeug vorhandene Hardware in Form von Kameras genutzt werden kann. Das ist beispielsweise der Fall, wenn ein Fahrzeug über ein Rückfahr- oder Parkhilfesystem verfügt oder ein System zur Erleichterung des Nachtfahrens aufweist, das auf der Verwendung von Nachtsichtgeräten und entsprechender Karneratechnik basiert.

### Kurze Beschreibung der Zeichnungen

An einem Ausführungsbeispiel wird die Erfindung näher erläutert. Es zeigen:
- Fig.1: eine schematische Darstellung eines erfindungsgemäß ausgestatteten Fahrzeuges in einem darstellbaren Umgebungsbereich;
- Fig.2: eine schematische Darstellung eines erfindungsgemäß aktualisierten Umgebungsbereiches und
- Fig. 3: eine schematische Darstellung eines erfindungsgemäßen Navigationssystems.

### Ausführungsform der Erfindung

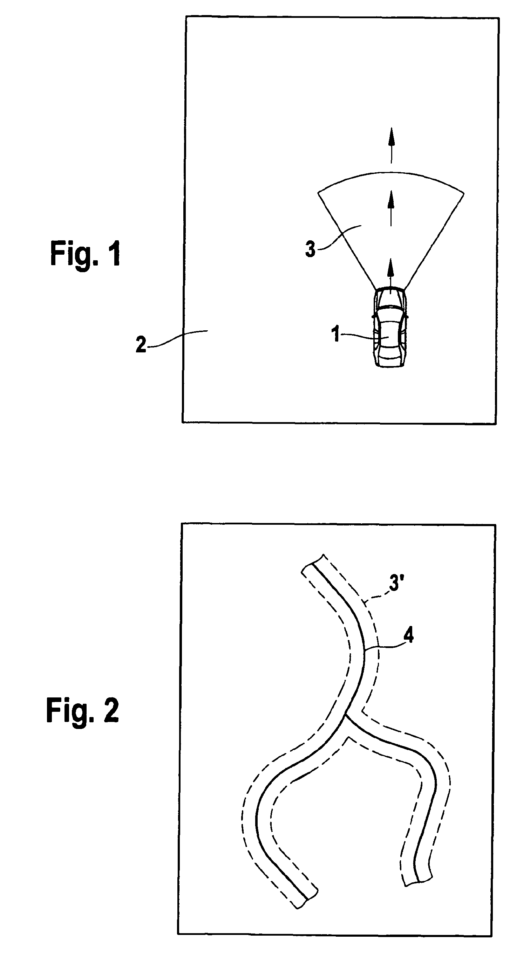

Fig.1 Ein mit einem erfindungsgemäßen Navigationssystem ausgestattetes Fahrzeug 1 befindet sich in einem Umgebungsbereich 2, der auf der Basis von in einem Datenspeicher des Navigationssystems abgelegten Daten rekonstruiert und auf einem Anzeigemittel in Form eines Monitors dargestellt werden kann. Das Fahrzeug 1 bewegt sich in Pfeilrichtung. Ein Teil dieses Bereiches wird von einer zum Navigationssystem gehörenden Kamera, die in Fahrtrichtung ausgerichtet ist, eingesehen, woraus sich aus der Auflösung und dem Bildwinkel der Kamera ein weiterer Bereich 3 ergibt, der als digitales Bild mit vom System auswertbarer Auflösung erfasst und als digitaler Bilddatensätz abgelegt werden kann. Die so gewonnenen digitalen Bilddaten und Informationen können zumindest teilweise durch eine entsprechende Einpassung in die ursprüngliche Rekonstruktion der Fahrzeugumgebung einbezogen und so direkt durch Überlagerung der bisherigen Darstellung oder indirekt durch eine Änderung bzw. Optimierung grafischer Parameter Bestandteil der auf dem Monitor angezeigten Ansicht der Fahrzeugumgebung werden. Dazu ist es erforderlich, einen geometrischen Abgleich zwischen der datenbasierten Rekonstruktion der Fahrzeugumgebung und der digitalen Aufnahme der Kamera vorzunehmen, was durch Software zur Mustererkennung und Entzerrung unterstützt wird. Das ist wiederum erforderlich, um einander entsprechende Flächen eindeutig zuweisen zu können und Fehlinterpretationen zu vermeiden. Die auf diese Weise erfindungsgemäß generierte Darstellung der Fahrzeugumgebung auf dem Monitor des Navigationssystems beruht auf einer Bearbeitung ursprünglich bereitgestellter Umgebungsdaten unter Einbeziehung von in Echtzeit aufgenommenen Digitalbildern. Damit ergibt sich durch Bearbeitung der ursprünglich bereitgestellten Daten gleichzeitig die Möglichkeit zu deren Aktualisierung. Daher ist es für eine weitere Verwendungen der aktualisierten Daten vorteilhaft, wenn die bearbeiteten Daten in einem Datenspeicher abgelegt werden. Besonders vorteilhaft ist es, wenn die Daten für die Rekonstruktion der Fahrzeugumgebung aus einem zentralen Datenspeicher abgerufen werden und die bearbeiteten Daten in einem zentralen Datenspeicher abgelegt werden, der vorzugsweise mit mehreren Endgeräten von Navigationssystemen verbunden werden kann, wobei die Ablage der bearbeiteten Daten in einer weise erfolgt, dass die im zentralen Datenspeicher abgelegten Daten nach einem weiteren Abruf die Basis einer Rekonstruktion der Fahrzeugumgebung bilden. Auf diese Weise lässt sich ein Datenbestand aufbauen, der bei jeder Benutzung automatisch aktualisiert wird. Als Endgeräte von Navigationssystemen sind in diesem Zusammenhang die fahrzeugseitigen Komponenten erfindungsgemäßer Navigationssysteme zu verstehen.

In Fig.2 ist dargestellt, in welchem Bereich 3' bei Abfahren einer Route 4 eines Fahrzeuges eine Erfassung digitaler Bilder möglich ist, wenn das erfindungsgemäße Verfahren permanent eingesetzt wird. Es ergeben sich schlauchförmig erfasste Bereiche 3', in denen, wenn eine erfindungsgemäße Datenaktualisierung durchgeführt wurde, bei häufiger Frequentierung außerordentlich aktuelle Umgebungsdaten zur Verfügung stehen. Werden die aktualisierten Daten einem zentralen Speicher, beispielsweise an einem Server, zur Verfügung gestellt, so kommt es unter Einbindung mehrerer erfindungsgemäß ausgestatteter Fahrzeuge in die Datenaktualisierung allmählich zu einer flächenerfüllenden Überlagerung der permanent aktualisierten Bilddaten. Die aktualisierten Daten bilden die Grundlage künftiger umgebungsrekonstruktionen zur Darstellung auf dem Anzeigemittel der Navigatiorissysteme, die bei erneutem Abfahren der Route 4 wiederum aktualisiert werden. Auf diese Weise ergibt sich ein kostengünstiges System der Datenaktualisierung, da gesonderte Fahrten zur Aktualisierung entfallen können. Außerdem können diese Daten auch Nutzern zur Verfügung gestellt werden, die selbst nicht über ein erfindungsgemäßes kameragestütztes Navigationssystem verfügen, jedoch zum Empfang der erfindungsgemäß generierten Daten in der Lage sind, und diese in herkömmlicher weise in ihr Navigationssystem einbeziehen möchten, um von deren hohem Aktualitätsgrad zu profitieren.

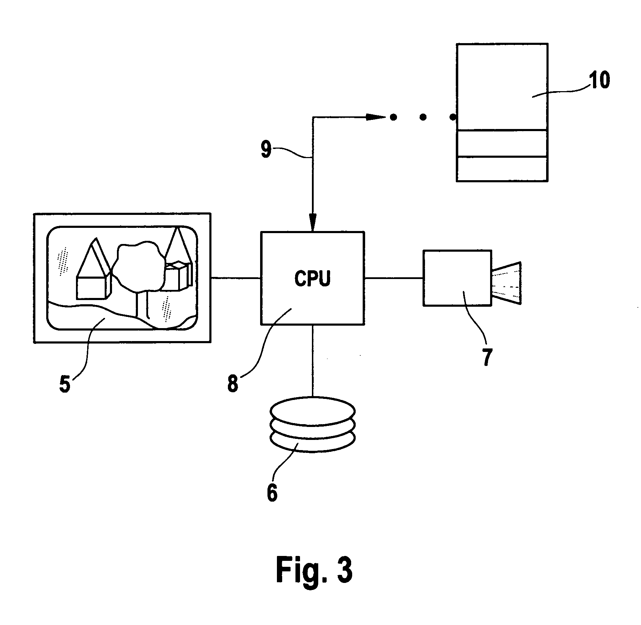

Fig.3 zeigt eine schematische Darstellung eines erfindungsgemäßen Navigationssystems. Dieses umfasst ein elektronisches Anzeigemittel in Form eines Monitors 5, wie er auch in herkömmlichen Navigationssystemen zum Einsatz kommen kann. Des weiteren ist ein Datenspeicher 6 umfasst, der Daten enthält, die eine dreidimensionale Rekonstruktion der Umgebung des mit dem Navigationssystem ausgestatteten Fahrzeuges ermöglichen. Der Datenspeicher 6 umfasst vorteilhafterweise ein Wechselmedium, um anwenderspezifische Datensätze nachträglich einbeziehen oder austauschen zu können. Erfindungsgemäß gehört zum Navigationssystem außerdem mindestens eine digitale Kamera 7, welche digitale Bilder der Fahrzeugumgebung aufnehmen kann. Für die Funktion des erfindungsgemäßen Navigationssystems ist es unerheblich, ob die digitale Kamera 7 ausschließlich in das Navigationssystem einbezogen wird oder gleichzeitig oder im wechsel Bestandteil weiterer kameragestützter Systeme des Fahrzeuges ist. Als Kamera genügt eine digitale Mono-Kamera, wobei auch digitale Stereo-Kameras geeignet sind. Des weiteren ist eine Datenverarbeitungseinheit 8 umfasst, welche zumindest über die Kapazität verfügt, aus den im Datenspeicher 6 enthaltenen Daten eine auf dem Monitor 5 darstellbare Rekonstruktion der Fahrzeugumgebung zu erzeugen und eine zumindest teilweise Einpassung der von der digitalen Kamera 7 aufgenommenen digitalen Bilder in die auf den im Datenspeicher 6 enthaltenen Daten basierende Rekonstruktion der Fahrzeugumgebung vornehmen zu können. Diese Datenverarbeitungseinheit 8 verfügt des weiteren über Verbindungsmittel 9 zu einem zentralen Datenspeicher 10 auf einem Server, aus dem von der Datenverarbeitungseinheit 8 Daten für eine Rekonstruktion der Fahrzeugumgebung, abgerufen werden können und in dem von der Datenverarbeitungseinheit 8 bearbeitete Daten abgelegt werden können. Die Verbindungsmittel 9 umfassen eine drahtlose Verbindung in ein Funknetz, über das der Kontakt zum Server bei Bedarf hergestellt wird. Der Server mit dem zentralen Datenspeicher 10 verfügt über Mittel, um gleichzeitig von mehreren Endgeräten, also Navigationssystemen mit erfindungsgemäßer Ausstattung, abgefragt bzw. als Datenspeicher angesprochen zu werden.

Während der Fahrt mit dem erfindungsgemäßen Navigationssystem wird im vorliegenden Beispiel die reale Umgebung des Fahrzeuges mit der umfassten digitalen Kamera 7 permanent optisch erfasst, wobei in enger zeitlicher Abfolge digitale Bilder erzeugt werden. Es folgt die Zerlegung der Bilder auf der Basis bekannter Gebäudepositionen, -abmessungen und -lagen sowie anderer markanter Strukturen, beispielsweise Verkehrsflächen. Mit Hilfe einer Mustererkennung wird eine Zuordnung identifizierter Flächen zu den entsprechenden Flächen in der datenspeicherbasierten Rekonstruktion der Fahrzeugumgebung vorgenommen . Von der Kamera 7 gelieferte Bilder werden in einem nächsten Schritt in Echtzeit in die dreidimensionale Darstellung der Umgebung eingerechnet und zur Anzeige auf dem Monitor 5 gebracht . Plausibilitätsprüfungen können helfen, temporäre Hindernisse, beispielsweise parkende Fahrzeuge, von der erfindungsgemäßen Bildauswertung auszuschließen. Die Erkennbarkeit wird bereits deutlich gesteigert, wenn einzelne Bildausschnitte auf markante Objekte, beispielsweise Gebäude, gelegt werden, also gemischte Bilder aus virtuellen dreidimensionalen Bildern in Kombination mit bereichsweise fotorealistisch angezeigten Ausschnitten erzeugt werden.

Da sich fotorealistische Darstellungen zur Erzielung eines natürlichen visuellen Eindrucks stets auch nach den äußeren Beleuchtungsverhältnissen, der jeweiligen Witterung, der Tageszeit und ähnlichen Faktoren richten müssen, kommt deren Speicherung in einem zentralen System eventuell geringere Bedeutung zu, als einer texturbasierten oder zumindest weitgehend texturbasierten zentralen batenablage. Da im Zuge einer Rekonstruktion einer Fahrzeugumgebung aus üblicherweise abgespeicherten Daten in herkömmlichen Navigationssystemen Gebäuden und Flächen lediglich Standarttexturen zugewiesen werden, ergibt sich auch in diesem Fall durch die Nutzung des erfindungsgemäßen Systems eine wesentliche Steigerung des Betrachterkomforts, da der Grad der Übereinstimmung einer texturiert angezeigten Fläche mit deren tatsächlichem visuellen Erscheinungsbild erheblich verbessert wird.

Ergänzend zur Einrechnung der Bilder der digitalen Kamera 7 in die dreidimensionale Darstellung der Fahrzeugumgebung erfolgt zu diesem zweck ein Vergleich der texturiert anzeigbaren rekonstruierten Flächen mit den entsprechenden Flächen der digitalen Bilder. Wird eine zu große Differenz zu einer gespeicherten Textur festgestellt, wird der Ersatz dieser Textur durch eine andere in einem Speicher abgelegte Textur veranlasst oder eine neue Textur angelegt. Für die Ablage vorbereiteter Texturen kann sowohl der im Fahrzeug enthaltene Datenspeicher 6, als auch der zentrale Datenspeicher 10 des Servers genutzt werden. Die neu angelegte oder ausgetauschte Textur hat in jedem Fall eine höhere Ähnlichkeit mit der entsprechenden Fläche in der realen Umgebung.

In einer weiteren vorteilhaften Ausgestaltung werden neue Texturen im Zuge einer Texturverwaltung auf die Ähnlichkeit zu bisher gespeicherten Texturen geprüft. Gegebenenfalls kann eine Zusammenfassung von ähnlichen Texturen veranlasst werden, was insbesondere nach Plausibilitätsprüfungen zweckmäßig sein kann, um den Datenbestand übersichtlich zu halten. Die Texturen können hinsichtlich der Farbe und/oder ihrer Struktur erkannt und unterschieden werden. Für die Anzahl der Texturstufungen kann es Einschränkungen bezüglich der Farben und Strukturen geben, wobei auch bei einer geringeren Anzahl von Texturen im erfindungsgemäßen System eine Verbesserung der Anzeigequalität erzielt werden kann, wenn vorzugsweise Texturen eingeführt werden, die bei einer erfindungsgemäßen Datenaktualisierung selten ersetzt werden müssen, was für eine bereits naturnahe Rekonstruktion der Fahrzeugumgebung spricht.

## Patentansprüche

1. Verfahren zur Verbesserung der Übereinstimmung zwischen einer durch ein Navigationssystem virtuell erzeugten und auf einem Anzeigemittel (5) dargestellten Rekonstruktion von Szenen aus der Umgebung eines Fahrzeuges (1), die in einem Datenspeicher (6) abgelegt ist, und dem visuellen Eindruck eines Fahrers dieses Fahrzeugs beim Betrachten der realen Szenen, bei dem mit Hilfe einer Kamera (7) digitale Bilder der Fahrzeugumgebung aufgenommen werden, **dadurch gekennzeichnet, dass** die aufgenommenen Bilder auf Grundlage bekannter Gebäudepositionen, -abmessungen und -lagen sowie weiterer markanter Strukturen in Flächen zerlegt werden, wobei die identifizierten Flächen zu entsprechenden Flächen der Rekonstruktion der Fahrzeugumgebung mithilfe einer Mustererkennung zugeordnet werden, und wobei die von der Kamera gliefertern Bilder in die Rekonstruktion eingerechnet und zur Anzeige gebracht werden.

2. Verfahren nach Anspruch 1, **dadurch gekennzeichnet, dass** zumindest einige Flachenbereiche der auf dem Anzeigemittel (5) dargestellten Rekonstruktion von Szenen aus der Umgebung des Fahrzeuges von eingerechneten Ausschnitten aus digitalen Bildern der entsprechenden Szenen überlagert werden.

3. Verfahren nach Anspruch 1 oder 2, **dadurch gekennzeichnet,**
**dass** in zumindest einigen Flächen der auf dem Anzeigemittel (5) dargestellten Rekonstruktion von Szenen aus der Umgebung des Fahrzeuges (1) ein Vergleich zwischen einer in der Rekonstruktion dargestelllen Textur und dem zugehörigen Bindausschnitt des digitalen Bildes vorgenommen wird und bci Feststellen einer zu groβen Abweichung die Textur durch eine andere ersetzt wird.

4. Verfahren nach Anspruch 3, **dadurch gekennzeichnet, dass** durch eine Datenverarbeitungseinheit (8) geprüft wird, ob zum Ersatz der Textur eine geeignetere Textur in dem Datenspeicher (6) hinterlegt ist und den Ersatz der Textur vornimmt oder unter Auswertung der Fläche mit der zu ersetzenden Textur entsprechenden Ausschnittes eines digitalen Bildes eine Textur erzeugt, welche der realen Ansicht der betroffenen Fläche besser entspricht, als die zu ersetzende Textur und diese durch die erzeugte Textur ersetzt.

5. Verfahren nach einem der Ansprüche 1 bis 4, **dadurch gekennzeichnet, dass** die bearbeiteten Daten in dem Datenspeicher (6) abgelegt werden.

6. Verfahren nach einem der Ansprüche 1 bis 5, **dadurch gekennzeichnet, dass** die Daten für die Rekonstruktion der Fahrzeugumgebung aus einem zentralen Datenspeicher (10) abgerufen werden und die bearbeiteten Daten in dem zentralen Datenspeicher (10) abgelegt werden, der vorzugsweise mit mehreren Endgeräten von Navigationssystemen verbunden werden kann, wobei die Ablage der bearbeiteten Daten in einer Weise erfolgt, dass die im zentralen Datenspeicher (10) abgelegten Daten nach einem weiteren Abruf die Basis einer Rekonstruktion der Fahrzeugumgebung bilden können.

7. Navigationssystem für Kraftfahrzeuge, das die Verfahrensschritte nach einem der Ansprüche 1 bis 6 durch führt

8. Navigationssystem nach Anspruch 7, **dadurch gekennzeichnet, dass** mindestens eine Kamera (7) umfasst ist, die Bestandteil eines weiteren zum Fahrzeug gehörenden kamerabasierten Systems ist.

9. Navigationssystem nach Anspruch 7 oder 8, **dadurch gekennzeichnet, dass** die Kamera (7) Bestandteil eines Rückfahr- und/oder Parkhilfesystems und/oder Systems zur Nachtfahrhilfe ist.

10. Navigationssystem nach einem der Ansprüche 7 bis 9, **dadurch gekennzeichnet, dass** Verbindungsmittel (9) zu einem zentralen Datenspeicher (10) umfasst sind, aus dem von der Datenverarbeitungseinheit (8) Daten für eine Rekonstruktion der Fahrzeugumgebung abgerufen werden können und/oder in dem von der Datenverarbeitungseinheit (8) bearbeitete Daten abgelegt werden können, wobei der zentrale Datenspeicher (10) vorzugsweise mit mehreren Endgeräten von Navigationssystemen verbunden werden kann.

## Claims

1. Method for improving the match between a reconstruction of scenes from the surroundings of a vehicle (1), which reconstruction is produced virtually by a navigation system, is presented on a display means (5) and is stored in a data memory (6), and the visual impression of a driver of said vehicle when looking at the real scenes, in which a camera (7) is used to record digital images of the vehicle surroundings, **characterized in that** the recorded images are broken down into areas on the basis of known building positions, dimensions and situations and also further distinctive structures, wherein the identified areas are associated with corresponding areas in the reconstruction of the vehicle surroundings by using pattern recognition, and wherein the images delivered by the camera are included in the reconstruction and are displayed.

2. Method according to Claim 1, **characterized in that** at least some area ranges from the reconstruction of scenes from the surroundings of the vehicle that is presented on the display means (5) are overlaid with included details from digital images of the relevant scenes.

3. Method according to Claim 1 or 2, **characterized in that** in at least some areas of the reconstruction of scenes from the surroundings of the vehicle (1) that is presented on the display means (5) a comparison is performed between a texture that is presented in the reconstruction and the associated image detail from the digital image, and if an excessive discrepancy is found then the texture is replaced by another.

4. Method according to Claim 3, **characterized in that** a data processing unit (8) checks whether a more suitable texture for replacing the texture is stored in the data memory (6) and replaces the texture or, by evaluating the area of that detail from a digital image which corresponds to the texture that is to be replaced, produces a texture which better corresponds to the real view of the area in question than the texture to be replaced and replaces the latter with the texture produced.

5. Method according to one of Claims 1 to 4, **characterized in that** the edited data are stored in the data memory (6).

6. Method according to one of Claims 1 to 5, **characterized in that** the data for the reconstruction of the vehicle surroundings are retrieved from a central data memory (10) and the edited data are stored in the central data memory (10), which can preferably be connected to a plurality of terminals from navigation systems, wherein the edited data are stored such that the data stored in the central data memory (10) are able, following further retrieval, to form the basis for a reconstruction of the vehicle surroundings.

7. Navigation system for motor vehicles which performs the method steps according to one of Claims 1 to 6.

8. Navigation system according to Claim 7, **characterized in that** at least one camera (7) is included which is part of a further camera-based system associated with the vehicle.

9. Navigation system according to Claim 7 or 8, **characterized in that** the camera (7) is part of a reversing and/or parking assistance system and/or a system for night driving assistance.

10. Navigation system according to one of Claims 7 to 9, **characterized in that** connecting means (9) for a central data memory (10) are included, from which central data memory the data processing unit (8) is able to retrieve data for a reconstruction of the vehicle surroundings and/or in which central data memory the data processing unit (8) is able to store edited data, wherein the central data memory (10) can preferably be connected to a plurality of terminals from navigation systems.

## Revendications

1. Procédé pour l'amélioration de la concordance entre une reconstruction des scènes de l'environnement d'un véhicule (1) générée virtuellement par un système de navigation et représentée sur un moyen de visualisation (5), déposée dans une mémoire de données (6), et l'impression visuelle d'un conducteur de ce véhicule lorsqu'il regarde les scènes réelles, dans lequel on enregistre des images numériques de l'environnement du véhicule à l'aide d'une caméra (7), **caractérisé en ce que** les images enregistrées sont décomposées en surfaces basées sur des positions, des dimensions et des situations connues de bâtiments ainsi que sur d'autres structures marquantes, les surfaces identifiées étant attribuées à des surfaces correspondantes de la reconstruction de l'environnement du véhicule à l'aide d'une reconnaissance de motifs, et les images fournies par la caméra étant incluses par calcul dans la reconstruction et acheminées vers la visualisation.

2. Procédé selon la revendication 1, **caractérisé en ce qu'**au moins quelques domaines de surfaces de la reconstruction de scènes de l'environnement du véhicule représentées sur le moyen de visualisation (5), sont superposées par calcul à des sections d'images numériques des scènes correspondantes.

3. Procédé selon la revendication 1 ou 2, **caractérisé en ce qu'**on entreprend dans au moins quelques surfaces de la reconstruction de scènes de l'environnement du véhicule (1) représentées sur le moyen de visualisation (5), une comparaison entre une texture représentée dans la reconstruction et la section d'image correspondante de l'image numérique et lorsqu'on constate une différence trop importante, on remplace la texture par une autre.

4. Procédé selon la revendication 3, **caractérisé en ce qu'**une unité de traitement de données (8) vérifie si pour remplacer la texture, une texture plus appropriée est stockée dans la mémoire de données (6) et entreprend le remplacement de la texture ou après traitement de la surface avec la section d'une image numérique correspondant à la texture à remplacer, génère une texture correspondant mieux à l'aspect réel de la surface concernée que la texture à remplacer et remplace celle-ci par la texture générée.

5. Procédé selon une des revendications 1 à 4, **caractérisé en ce que** les données traitées sont déposées dans la mémoire de données (6).

6. Procédé selon une des revendications 1 à 5, **caractérisé en ce que** les données pour la reconstruction de l'environnement du véhicule sont récupérées à partir d'une mémoire de données centrale (10) et les données traitées sont déposées dans la mémoire de données centrale (10) qui peut de préférence être reliée à plusieurs équipements terminaux de systèmes de navigation, le dépôt des données traitées s'effectuant de telle sorte que les données déposées dans la mémoire de données centrale (10) puissent constituer la base d'une reconstruction de l'environnement du véhicule suite à une autre récupération.

7. Système de navigation pour véhicules automobiles effectuant les étapes du procédé selon une des revendications 1 à 6.

8. Système de navigation selon la revendication 7, **caractérisé en ce qu'**il comporte au moins une caméra (7) faisant partie d'un système de caméras plus étendu appartenant au véhicule.

9. Système de navigation selon la revendication 7 ou 8, **caractérisé en ce que** la caméra (7) fait partie d'un système de recul et/ou d'un système d'aide au stationnement et/ou d'un système d'aide à la conduite nocturne.

10. Système de navigation selon une des revendications 7 à 9, **caractérisé en ce qu'**il comprend des moyens de liaison (9) avec une mémoire de données centrale (10) à partir de laquelle l'unité de traitement de données (8) peut récupérer des données pour la reconstruction de l'environnement du véhicule et/ou dans laquelle l'unité de traitement de données (8) peut déposer des données traitées, la mémoire de données centrale (10) pouvant de préférence être reliée à plusieurs équipements terminaux de systèmes de navigation.
